# EUROPEAN PATENT SPECIFICATION

(11) **EP 3 458 627 B1**
(45) Date of publication and mention of the grant of the patent: **23.09.2020**
(21) Application number: 16735602.1
(22) Date of filing: 27.06.2016
(51) Int. Cl.: C25B 13/08, C25B 1/10

(54) **AN INORGANIC FIBER REINFORCED GAS SEPARATOR FOR ELECTROCHEMICAL CONVERSION PROCESSES**
ANORGANISCHER FASERVERSTÄRKTER GASABSCHEIDER FÜR ELEKTROCHEMISCHE UMWANDLUNGSVERFAHREN
SÉPARATEUR DE GAZ RENFORCÉ DE FIBRES INORGANIQUES POUR PROCÉDÉS DE CONVERSION ÉLECTROCHIMIQUE

(43) Date of publication of application: 27.03.2019
(73) Proprietor: Siemens Aktiengesellschaft, 80333 München (DE)
(72) Inventor: HANSEN, Martin Kalmar, 2720 Vanløse (DK); THERKILDSEN, Kasper Tipsmark, 4623 Lille-Skensved (DK)
(86) International application number: PCT/EP2016/064828
(87) International publication number: WO 2018/001448

(56) References cited:
- EP-A1- 0 624 283
- JP-A- S5 323 871
- US-A- 4 311 566
- US-A- 4 410 638
- RENAUD R ET AL: "Separator materials for use in alkaline water electrolysers", INTERNATIONAL JOURNAL OF HYDROGEN ENERGY, ELSEVIER SCIENCE PUBLISHERS B.V., BARKING, GB, vol. 7, no. 2, 1 January 1982 (1982-01-01) , pages 155-166, XP025591465, ISSN: 0360-3199, DOI: 10.1016/0360-3199(82)90142-2
- DATABASE WPI Week 197815 Thomson Scientific, London, GB; AN 1978-28113A XP002760678, -& JP S53 23871 A (NIPPON ASBESTOS CO LTD) 4 March 1978 (1978-03-04)

## Description

The present invention relates to methods for making gas separators for electrochemical conversion processes, particularly an inorganic fiber reinforced gas separator for use in electrochemical conversion processes.

The document EP 0 624 283 A1 describes a method for making a porous membrane with a symmetrical structure which is gas-tight when saturated with electrolyte and whereby, according to this method, a solution is made from an organic binding agent in a solvent and the solvent is removed by means of extraction through immersion in an organic non-solvent, wherein an amount of metal oxide and/or metal hydroxide is added to the solution.

The publication "Database WPI, Week 197815, Thomson Scientific, London, GB, AN 1978-28113A; -& JP S53 23871 A (Nippon Asbestos co ltd) 4 March 1978" describes a diaphragm. The diaphragm is used for electrolytic regenerating appts. of chromic acid.

The publication "Separtor materials for use in alkaline water electrolysers, international journal of hydrogen energy, elsevier science publishers b.v., barking, GB, vol. 7, no. 2, 1 january 1982, pages 155-166, XP025591465", describes separator materials suitable for use in indutrial alkaline water electrolysers, including both inorganic an organic materials.

The document US 4 412 638 A describes a diaphragm for electrolysis and a process for preparation thereof by polymerizing in fluorinated milroporous membrane. The diaphragm is prepared by dispositing a copolymer of an unsaturated carboxylic acid and a non-ionic unsaturated monomer in the diaphragm.

The document US 4 311 566 A describes an electrolyte permeable, non-asbestos diaphragm for chlor-alkali electrolytic cells.

In modern times, electrochemical conversion processes such as electrolysis are used for various purposes, for example in Hydrogen and/or Oxygen generation which are achieved by hydrogen evolution reaction (HER) and Oxygen evolution reaction (OER) in an electrolyser by electrolysis of electrolyte i.e. generally water. Usually, alkaline or acidic water is used as the electrolyte. The electrochemical conversion devices in which such electrochemical conversion processes are performed, for example electrolyser, include electrodes that conduct electrical energy to the electrolyte and thus decomposes the electrolyte and/or other added reactants to generate desired products such as oxygen gas, hydrogen gas, etc. An important component used in such electrochemical conversion processes is a gas-tight membrane or a diaphragm that divides the electrochemical conversion devices into chambers or compartments and allows flow of ions from one such chamber to another, but does not allow flow of gases such as Oxygen or Hydrogen from one chamber to another and thereby keeping the products of the electrochemical conversions separate and thus recoverable. The gas-tight membranes or diaphragms are also referred to as gas separators.

Various types of gas separators are used in electrolysers and various techniques are used to fabricate such gas separators. In a commonly used technique a solution is made from an organic binding agent in a solvent. Furthermore, optionally an amount of metal oxide and/or metal hydroxide is added to the suspension. The suspension is then set in form of a sheet and finally the solvent is removed by means of extraction through immersion in a non-solvent. Such gas separators have low mechanical strength and are prone to failures when subjected to pressurized chambers which are common in the electrolysers in which such gas separators are installed for usage. Furthermore, since such gas separators are fragile, installation of such gas separators into the electrolyser requires high skill and is often complicated and prone to tear or breakage of the gas separators.

To solve the problem of low mechanical strength and durability often a mesh-structure or a fabric that forms the core or substrate of the gas separator is used. The mesh-structure or the fabric is immersed in or is coated with the suspension and then the mesh-structure or the fabric along with the suspension coating is set to form the gas separator. Subsequently, the solvent is removed by means of extraction through immersion of the gas separator in a non-solvent. Such gas separators with mesh-structure or fabric core or substrate are mechanically stronger but suffer from other disadvantages. One such disadvantage is that dimensions of such gas separators are limited by dimensions of the mesh-structure or fabric used. Furthermore, setting of the mess-structure or fabric in the suspension is complicated and needs to be carried out with utmost precession to obtain a uniformly formed gas separator. Often the amount of coating of the solution on opposing sides of the mesh-structure or fabric is different and thus results in a non-uniform gas separator which is not optimally efficient for usage in the electrochemical conversion processes. Also, the mesh-structure or the fabric adds to the cost of such gas separators.

Thus there is a need for a gas separator for use in electrochemical conversion processes that is mechanical strong and does not suffer from limitations contributed by the mesh-structure or the fabric.

Thus the object of the present disclosure is to provide a gas separator and a method for making the gas separator for use in electrochemical conversion processes.

The above object is achieved by a method for making a gas separator for use in electrochemical conversion processes according to claim 1. Advantageous embodiments of the present technique are provided in dependent claims.

In an aspect of the present technique, a method for making a gas separator for electrochemical conversion processes is presented. In the method, a casting suspension is prepared by mixing an inorganic fiber into a solution. The solution has an organic binding material as a solute, and a solvent. Thereafter, a sheet is formed by spreading the casting suspension on an inert surface such as glass surface. Finally, the solvent is extracted from the sheet wherein the solvent is removed to form the gas separator. Due to presence of the inorganic fibers the requirement of having a mesh like structure to form the core of the separator is obviated and thus dimensions of the gas separator of the present technique are not limited by the mesh-structure or the fabric. Furthermore, the inorganic fibers provide mechanical strength to the gas separator of the present technique.

The inorganic fiber is hydrophilic. The inorganic fibers is one of zirconia fibers, Barium sulphate fibers, Wollastonite fibers, and a combination thereof. Thus, the inorganic fibers also function as the hydrophilic part of the gas separator hence ensuring the ionic conductivity for the gas separator.

In another embodiment of the method, the organic binding material is an organic polymer such as polysulphone, polyvinylidene fluoride, polyacrylonitrile, polyethyleneoxide, polymethylmethacrylate, or copolymers thereof. The polymers have high heat resistance, oxidation/reduction resistance, and durability and sheet forming properties.

In another embodiment of the method, the solvent is one of N-methyl-2-pyrrolidone (NMP), N-ethyl-2-pyrrolidone (NEP), N,N-dimethylformamide (DMF), formamide, dimethylsulphoxide (DMSO), N,N-dimethylacetamide (DMAC), acetonitrile and mixtures thereof. These provide examples for realizing the method of the present technique by providing a solvent for the solute i.e. the organic binding material.

In another embodiment of the method, in forming the sheet a layer of the casting suspension with a constant thickness is spread on the inert surface. Thus the gas separator so formed has constant thickness thus ensuring uniform properties at different parts of the gas separator.

In another embodiment of the method, the solvent extraction is performed by evaporating the solvent from the sheet. In yet another embodiment of the method, the solvent extraction is performed by leaching the solvent out of the sheet wherein the solvent is leached out of the sheet by immersing the sheet into and/or washing the sheet using a non-solvent such as water, an alcohol, and a combination thereof. In the method, only one of the solvent extraction by evaporation and the solvent extraction by leaching may be performed or alternatively the solvent extraction by evaporation and the solvent extraction by leaching may both be performed one after the other in any order. This provides simple and effective techniques for solvent extraction.

In the method, in preparing the casting suspension a metal oxide and/or a metal hydroxide is added to the solution, as specified in claim 1. Examples of metal oxide may be, but not limited to, Zirconium dioxide, titanium oxide, and so on and so forth. Thus ensuring an increase in hydrophilic component of the gas separator and thereby enhanced ionic conductivity for the gas separator.

In another embodiment of the method, in preparing the casting suspension, a pore forming material is added to the solution. Furthermore, the method includes removal of pore forming material from the sheet simultaneous with and/or subsequent to the extracting the solvent from the sheet. The pore forming material may be, but not limited to, Zinc oxide, a polymer such as polyvinylpyrrolidone (PVP). Thus the overall porosity of the gas separator is modified as required for the use of the gas separator.

A gas separator may be formed by the method according to the above mentioned aspect of the present technique. The gas separator does not require a mesh-structure or a fabric as the core or substrate of the gas separator. Thus the gas separator is not limited by the dimensions of the mesh-structure or the fabric, and is mechanical strong, durable, economical and functional to be used in various electrochemical conversion processes such as alkaline water electrolysis.

The present technique is further described hereinafter with reference to illustrated embodiments shown in the accompanying drawing, in which:
- FIG 1: depicts a flow chart showing an exemplary embodiment of a method of the present technique; and
- FIG 2: depicts a flow chart showing another exemplary embodiment of the method of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

The basic idea of the present technique is to provide inorganic fibers in forming the gas separator wherein the inorganic fibers provide mechanical strength to the gas separator and thus need of a mesh-structure or fabric core is obviated. Furthermore, the inorganic fibers run through the gas separators and provide enhanced ionic conductivity to the gas separator. In other words the idea of the present technique is to use inorganic fibers for mechanical reinforcement of the gas separator and for providing ionic conductivity.

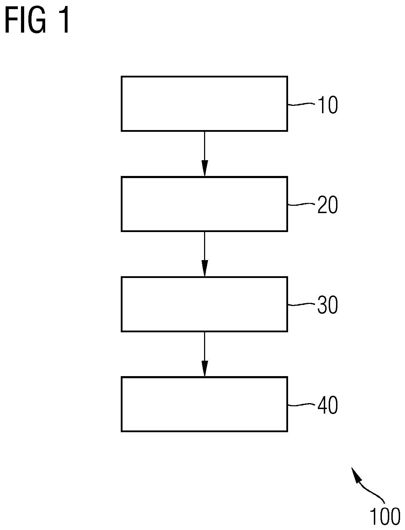

FIG 1 depicts a flow chart representing an exemplary embodiment of a method 100 in accordance with the present technique. The method 100 is for making a gas separator that is for use in electrochemical conversion processes, such as for use in an electrolyser for performing alkaline water electrolysis. The gas separator is particularly suited for alkaline cells, in particular as a gastight separator or diaphragm, filled with electrolyte, and positioned between the electrodes of the alkaline cells. In the method 100, in a step 10 a casting suspension is prepared by mixing an inorganic fiber into a solution. The solution has an organic binding material as a solute and the solution further has a solvent for the solute.

Examples of the inorganic fibers mixed or added to the solution include zirconia fibers, Barium sulphate fibers, Wollastonite fibers, and a combination thereof. The inorganic fibers used in the present technique are hydrophilic. The amount of the inorganic fibers added to the solution may be selected based on the requirement for which the gas separator is being made. In general a suitable amount of the inorganic fibers is between 5 percent by weight and 85 percent by weight.

To make the casting suspension, the solution of the organic binding material, such as a polymer binding agent for example polysulphone is first prepared in a solvent such as N-methyl-2-pyrrolidone (NMP), for example in a proportion of 10 to 30 percent by weight binding agent in relation to the amount of solvent. Other examples of suitable materials to be used as the organic binging material are, but not limited to, polyvinylidene fluoride (PVDF), polyacrylonitrile (PAN), polyethyleneoxide (PEO), polymethylmethacrylate (PMMA), or copolymers thereof. Other examples of the solvent include, but not limited to, N-ethyl-2-pyrrolidone (NEP), N,N-dimethylformamide (DMF), formamide, dimethylsulphoxide (DMSO), N,N-dimethylacetamide (DMAC), acetonitrile and mixtures thereof. Preferable to the solution of the organic binding material in a suitable solvent, the inorganic fibers are added and mixed well to evenly distribute the inorganic fibers in the solution.

Subsequently, in the method 100, in a step 20, a sheet is formed, from the casting suspension so prepared in step 10, by spreading the casting suspension on an inert surface such as a glass surface. By means of a pouring device the casting suspension, on a glass surface or any other inert surface, is spread evenly or is spread first and then evened out with a blade or wipe action to form a substantially even layer of the casting suspension on the inert surface, for example a layer of 100 to 1,000 micrometer of the casting suspension is applied onto the glass surface. It may be noted that formation of any bubbles in the sheet are avoided. The casting suspension may be allowed to set on the inert surface by letting the casting suspension to rest on the inert surface for several hours.

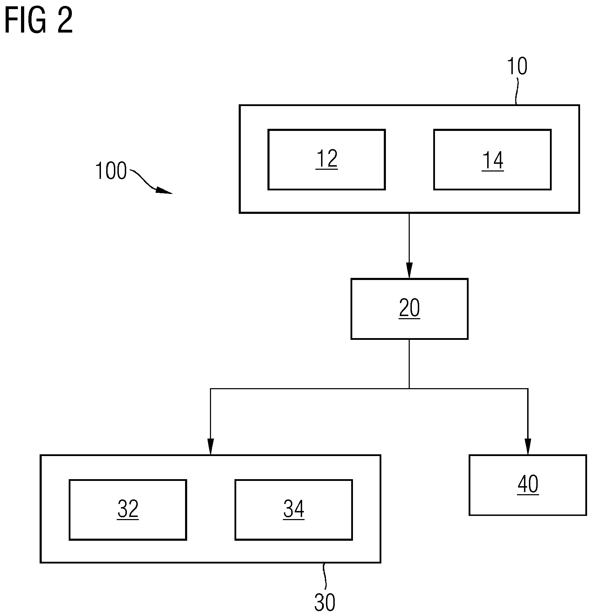

Finally in the method 100, in a step 30 the solvent, for example the NMP, is extracted from the sheet so formed on the inert surface and thus forming the gas separator of the present technique. Extraction of the solvent from the sheet has been explained in further details hereinafter with respect to FIG 2.

FIG 2, in combination with FIG 1, represents a flow chart of various other exemplary embodiments of the present technique. As shown in FIG 2, in step 30 of the method 100, the extraction of the solvent from the sheet may be performed either by evaporating the solvent from the sheet in step 32 or by leaching the solvent from the sheet as shown in step 34 or by both i.e. first by evaporating 32 the solvent from the sheet followed by leaching 34 the solvent from the sheet or first by leaching 34 the solvent from the sheet followed by evaporating 32 the solvent from the sheet. The step of evaporating the solvent is performed by letting the sheet, either still on the glass surface or removed from the glass surface, to stand for up to several hours. Subjecting the sheet to elevated temperatures increases the rate of evaporating of the solvent from the sheet thereby facilitating the step 32.

In the step 34 of leaching the solvent from the sheet, the solvent is leached out of the sheet by immersing the sheet into and/or washing the sheet using a non-solvent such as water, an alcohol, and a combination thereof. The sheet as set on the inert surface or the sheet removed from the inert surface is immersed in the non-solvent, preferably at room temperature. Suitable types of alcohol are ethanol, but especially isopropyl alcohol. Usually, an immersion time of 20 to 40 minutes is sufficient. The major part of the solvent is extracted in the non-solvent. The remaining solvent is removed by immersing the diaphragm or the gas separator) in a water bath for several hours.

Furthermore, as depicted in FIG 2, in another exemplary embodiment of the method 100, in the step 10 of forming the casting suspension, a metal oxide and/or a metal hydroxide is added to the solution in a step 12. Examples of metal oxide may be, but not limited to, Zirconium dioxide, titanium oxide, and so on and so forth. The metal oxides/hydroxides so added remain in the sheet and also in the gas separator prepared by the present technique and are not removed from the gas separator. Additionally but optionally, in step 10 of preparing the casting suspension in a step 14 a pore forming material is added to the solution either along with or subsequent to the addition of the organic binding material and/or the inorganic fibers. The pore forming material may be, but not limited to, Zinc oxide, a polymer such as polyvinylpyrrolidone (PVP), crosslinked polyvinylpyrrolidone (PVPP), poly(vinyl alcohol), poly(vinyl acetate), methyl cellulose and polyethylene oxide.

Preferably, at least one pore forming material is added to the casting suspension which advances the pore formation. When using PVP as the pore forming material a suitable amount lies between 0.5 percent by weight and 2 percent by weight, for example 0.7 percent by weight of the entire composition of the casting suspension. Preferably, the pore-forming material is added to the suspension after the organic binding material has been dissolved. Alternatively, first the pore-forming material is dissolved in the solvent, after which the organic binding material is added to the formed solution, preferably at an increased temperature, for example at 70 to 75 degrees Celsius.

Furthermore, the method 100 includes a step 40 of removing the pore forming material from the sheet simultaneous with the step 30 of extracting the solvent from the sheet, as depicted in FIG 2. In another embodiment of the method 100, as depicted in FIG 1, the step 40 of removing the pore forming material from the sheet is performed subsequent to the step 30 of extracting the solvent from the sheet. It may be noted that, in another embodiment of the method 100, the step 40 of removing the pore forming material from the sheet is simultaneous with and continues subsequent to the extracting the solvent from the sheet. The step 40 is performed depending on the pore forming material that was used in the step 14, for example when the pore forming material is Zinc oxide the step 40 is performed by subjecting the sheet to acidic or alkaline bath, whereas when the pore forming material is PVP the step 40 is performed by subjecting the sheet boiling water bath. The pore-forming material provides pores on a surface and internally in the gas separator.

A gas separator may be formed by the method 100 according to the above mentioned aspect of the present technique as described in reference to FIGs 1 and 2. It may be noted that the gas separator does not include a mesh-structure or a fabric as the core or substrate of the gas separator.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope of this invention. The scope of the invention is, therefore, indicated by the following claims rather than by the foregoing description.

## Claims

1. A method (100) for making a gas separator for use in electrochemical conversion processes, the method (100) comprising:
- one of the steps:
∘ preparing (10) a casting suspension by mixing an inorganic fiber, wherein the inorganic fiber is one of zirconia fibers, barium sulphate fibers, wollastonite fibers, and a combination thereof, into a solution and a metal hydroxide is added (12) to the solution, wherein the solution comprises an organic binding material as a solute and a solvent for the solute; or
∘ preparing (10) a casting suspension by mixing an inorganic fiber, wherein the inorganic fiber is barium sulphate fibers, into a solution ad a metal oxid and/or a metal hydroxide is added (12) to the solution, wherein the solution comprises an organic binding material as a solute and a solvent for the solute;
- forming (20) a sheet by spreading the casting suspension on an inert surface; and
- extracting (30) the solvent from the sheet wherein the solvent is removed to form the gas separator.

2. The method (100) according to claim 1, wherein the inorganic fiber is hydrophilic.

3. The method (100) according to any of claims 1 to 2, wherein the organic binding material is an organic polymer.

4. The method (100) according to claim 3, wherein the organic polymer is one of polysulphone, polyvinylidene fluoride, polyacrylonitrile, polyethyleneoxide, polymethylmethacrylate, or copolymers thereof.

5. The method (100) according to any of claims 1 to 4, wherein the solvent is one of N-methyl-2-pyrrolidone (NMP), N-ethyl-2-pyrrolidone (NEP), N,N-dimethylformamide (DMF), formamide, dimethylsulphoxide (DMSO), N,N-dimethylacetamide (DMAC), acetonitrile and mixtures thereof.

6. The method (100) according to any of claims 1 to 5, wherein in forming (20) the sheet a layer of the casting suspension with a constant thickness is spread on the inert surface.

7. The method (100) according to any of claims 1 to 6, wherein the solvent extraction (30) is performed by evaporating (32) the solvent from the sheet.

8. The method (100) according to any of claims 1 to 7, wherein the solvent extraction (30) is performed by leaching (34) the solvent out of the sheet wherein the solvent is leached out of the sheet by immersing the sheet into and/or washing the sheet using a non-solvent.

9. The method (100) according to claim 8, wherein the non-solvent is one of water, an alcohol, and a combination thereof.

10. The method (100) according to any of claims 1 to 9, wherein in preparing (10) the casting suspension, a pore forming material is added (14) to the solution and wherein the method (100) further comprises removing (40) the pore forming material from the sheet simultaneous with and/or subsequent to the extracting (30) the solvent from the sheet.

11. The method (100) according to claim 10, wherein the pore forming material is a polymer.

## Patentansprüche

1. Verfahren (100) zur Fertigung eines Gasabscheiders zur Verwendung in elektrochemischen Umwandlungsverfahren, wobei das Verfahren (100) umfasst:
- einen der Schritte:
∘ Herstellen (10) einer Gießsuspension durch Mischen von anorganischer Faser, wobei die anorganische Faser eine von Zirconiumdioxidfasern, Bariumsulfatfasern, Wollastonitfasern und einer Kombination davon ist, in eine Lösung, und wobei der Lösung ein Metallhydroxid (12) zugefügt wird, wobei die Lösung ein organisches Bindematerial als gelösten Stoff und ein Lösungsmittel für den gelösten Stoff umfasst; oder
∘ Herstellen (10) einer Gießsuspension durch Mischen von anorganischer Faser, wobei die anorganische Faser Bariumsulfatfasern ist, in eine Lösung, und wobei der Lösung ein Metalloxid und/oder ein Metallhydroxid (12) zugefügt wird, wobei die Lösung ein organisches Bindematerial als gelösten Stoff und ein Lösungsmittel für den gelösten Stoff umfasst;
- Bilden (20) einer Lage durch Ausbreiten der Gießsuspension auf einer inerten Oberfläche; und
- Extrahieren (30) des Lösungsmittels aus der Lage, wobei das Lösungsmittel entfernt wird, um den Gasabscheider zu bilden.

2. Verfahren (100) nach Anspruch 1, wobei die anorganische Faser hydrophil ist.

3. Verfahren (100) nach einem der Ansprüche 1 bis 2, wobei das organische Bindematerial ein organisches Polymer ist.

4. Verfahren (100) nach Anspruch 3, wobei das organische Polymer eines von Polysulfon, Polyvinylidenfluorid, Polyacrylnitril, Polyethylenoxid, Polymethylmethacrylat oder Copolymeren davon ist.

5. Verfahren (100) nach einem der Ansprüche 1 bis 4, wobei das Lösungsmittel eines von N-Methyl-2-pyrrolidon (NMP), N-Ethyl-2-pyrrolidon (NEP), N,N-Dimethylformamid (DMF), Formamid, Dimethylsulfoxid (DMSO), N,N-Dimethylacetamid (DMAC), Acetonitril und Mischungen davon ist.

6. Verfahren (100) nach einem der Ansprüche 1 bis 5, wobei beim Bilden (20) der Lage eine Schicht der Gießsuspension mit einer konstanten Dicke auf der inerten Oberfläche ausgebreitet wird.

7. Verfahren (100) nach einem der Ansprüche 1 bis 6, wobei die Lösungsmittelextraktion (30) durchgeführt wird, indem das Lösungsmittel aus der Lage verdampft (32) wird.

8. Verfahren (100) nach einem der Ansprüche 1 bis 7, wobei die Lösungsmittelextraktion (30) durch Auslaugen (34) des Lösungsmittels aus der Lage durchgeführt wird, wobei das Lösungsmittel aus der Lage ausgelaugt wird, indem die Lage in ein Nicht-Lösungsmittel getaucht und/oder die Lage mit einem Nicht-Lösungsmittel gewaschen wird.

9. Verfahren (100) nach Anspruch 8, wobei das Nicht-Lösungsmittel eines von Wasser, einem Alkohol und einer Kombination davon ist.

10. Verfahren (100) nach einem der Ansprüche 1 bis 9, wobei bei der Herstellung (10) der Gießsuspension der Lösung ein porenbildendes Material zugefügt (14) wird, und wobei das Verfahren (100) des Weiteren Entfernen (40) des porenbildenden Materials aus der Lage gleichzeitig mit Extrahieren (30) des Lösungsmittels aus der Lage und/oder im Anschluss daran umfasst.

11. Verfahren (100) nach Anspruch 10, wobei das porenbildende Material ein Polymer ist.

## Revendications

1. Procédé (100) pour faire un séparateur de gaz à utiliser dans des opérations de transformation électrochimiques, le procédé (100) comprenant :
- l'un des stades :
∘ préparation (10) d'une suspension de coulée en mélangeant une fibre minérale, la fibre minérale étant les unes de fibres d'oxyde de zirconium, de fibres de sulfate de baryum, de fibres de wollastonite et de leurs combinaisons, dans une solution et on ajoute (12) un hydroxyde métallique à la solution, la solution comprenant une matière organique liante comme soluté et un solvant du soluté ; ou
∘ préparation (10) d'une suspension de coulée en mélangeant une fibre minérale, la fibre minérale étant des fibres de sulfate de baryum, dans une solution et on ajoute (12) un oxyde métallique et/ou un hydroxyde métallique à la solution, la solution comprenant une matière organique liante comme soluté et un solvant du soluté ;
- formation (20) d'une feuille en étalant la suspension de coulée sur une surface inerte ; et
- extraction (30) du solvant de la feuille, le solvant étant retiré pour former le séparateur de gaz.

2. Procédé (100) suivant la revendication 1, dans lequel la fibre minérale est hydrophile.

3. Procédé (100) suivant l'une quelconque des revendications 1 et 2, dans lequel la matière organique liante est un polymère organique.

4. Procédé (100) suivant la revendication 3, dans lequel le polymère organique est l'un d'une polysulfone, du poly(fluorure de vinylidène), du polyacrylonitrile, du poly(oxyde d'éthylène), du poly(méthacrylate de méthyle) ou de leurs copolymères.

5. Procédé (100) suivant l'une quelconque des revendications 1 à 4, dans lequel le solvant est l'un de la N-méthyl-2-pyrrolidone (NMP), de la N-éthyl-2-pyrrolidone (NEP), du N,N-diméthylformamide (DMF), du formamide, du sulfoxyde de diméthyle (DMSO), du N,N-diméthylacétamide (DMAC), de l'acétonitrile et de leurs mélanges.

6. Procédé (100) suivant l'une quelconque des revendications 1 à 5, dans lequel, dans la formation (20) de la feuille, on étale une couche de la suspension de coulée en une épaisseur constante sur la surface inerte.

7. Procédé (100) suivant l'une quelconque des revendications 1 à 6, dans lequel on effectue l'extraction (30) du solvant en évaporant (32) le solvant de la feuille.

8. Procédé (100) suivant l'une quelconque des revendications 1 à 7, dans lequel on effectue l'extraction (30) du solvant en lixiviant (34) le solvant de la feuille, le solvant étant lixivié de la feuille en immergeant la feuille ou en lavant la feuille en utilisant un non-solvant.

9. Procédé (100) suivant la revendication 8, dans lequel le non-solvant est l'un de l'eau, d'un alcool et de leurs combinaisons.

10. Procédé (100) suivant l'une quelconque des revendications 1 à 9, dans lequel, dans la préparation (10) de la suspension de coulée, on ajoute (14) une matière porogène à la solution et dans lequel le procédé (100) comprend, en outre, l'élimination (40) de la matière porogène de la feuille en même temps que l'extraction (30) du solvant de la feuille et/ou après cette extraction.

11. Procédé (100) suivant la revendication 10, dans lequel la matière porogène est un polymère.
